# EUROPEAN PATENT APPLICATION

(11) **EP 3 599 071 A1**
(43) Date of publication of application: **29.01.2020**
(21) Application number: 19187637.4
(22) Date of filing: 22.07.2019
(51) Int. Cl.: B29C 45/44, B29C 45/33

(54) **UNDERCUT PROCESSING MECHANISM AND MOLDING MACHINE**

(30) Priority: 25.07.2018 JP 2018139196
(71) Applicant: Technocrats Corporation, Minami-ku Hiroshima-shi Hiroshima 732-0824 (JP)
(72) Inventor: SORIMOTO, Masanori, Aki-gun, Hiroshima 735-0026 (JP)
(74) Representative: Slingsby Partners LLP

(57) **Abstract**

An undercut processing mechanism 10 includes: a core pin 11 for forming an inner circumferential surface of a tubular projection P1; a slide core 31 for forming an outer circumferential surface of the tubular projection P1; a sliding piece 41 for causing the core pin 11 to advance/retract in an axial direction of the tubular projection P1; a retaining piece 51 for causing the sliding piece 41 to advance/retract; a holder 61 for accommodating the retaining piece 51 such that the retaining piece 51 can advance/retract; and a movement amount restrictor for restricting a movement amount of the core pin 11. The retaining piece 51 is operable to advance/retract in a state where a stationary die 100 and a movable die 200 are closed. When the core pin 11 retracts in conjunction with retraction of the retaining piece 51 and a movement amount of the core pin 11 reaches a restricted distance, the core pin 11 and the slide core 31 retract together, thereby allowing an undercut portion to be demolded.

## Description

### BACKGROUND OF THE INVENTION

### (Field of the Invention)

The present invention relates to an undercut processing mechanism that is incorporated and used in a molding machine for forming a molded product by using a stationary die and a movable die and that is capable of forming an undercut portion, and a molding machine including such an undercut processing mechanism.

### (Description of Related Art)

For a molding machine for forming a molded product having an undercut portion by using a stationary die and a movable die, multiple undercut processing mechanisms that correspond to the forms of undercut portions have been developed. For example, for a molded product having an annular bulge on the outer circumference of a tip end of a cylindrical portion, there exist an undercut processing mechanism in which a slide core divided into two sections is used, and an undercut processing mechanism that employs a method called forced pulling (see, for example, JP Utility Model Registration No. 3117386 and JP Laid-Open Patent Publication No. 2017-036768).

With a molding machine disclosed in JP Utility Model Registration No. 3117386 which is a cylindrical body having an annular bulge, it is possible to set a large step between a stem and a bulge at a tip end of a nipple by sliding a divided second slide core, which serves to form the shape of the nipple, only in a vertical outer circumference direction relative to the nipple via a guide pin.

With the undercut processing mechanism that employs the forced pulling method, an undercut portion is demolded by elastically deforming the undercut portion. JP Laid-Open Patent Publication No. 2017-036768 discloses a method in which a pipe core pin is composed of two pipe core pins, that is, first and second pipe core pins, and the second pipe core pin is forcedly pulled, thereby forming a pipe having: a projection that is formed so as to project on the outer circumferential surface of the pipe and is used for preventing a hose from coming off; and a projection that is formed so as to project on the inner circumferential surface of the pipe and is used for correction.

If divided pieces are used for forming the outer circumferential surface of a nipple as in the molding machine disclosed in JP Utility Model Registration No. 3117386, a partition line is formed at butting surfaces of two pieces, and may cause water leakage when a hose or the like is connected to the nipple. For such a concern, in reality, a molded product having an annular bulge on the outer circumference of a tip end of a cylindrical portion such as a nipple has to be formed by the forced pulling method.

An undercut processing mechanism disclosed so far and used for forming a molded product having an annular bulge on the outer circumference of a tip end of a cylindrical portion, requires many components, and also, incorporation of such an undercut processing mechanism into a mold is not particularly taken into consideration. Thus, it is difficult to incorporate such an undercut processing mechanism into a molding machine in a compact manner, and the size of the molding machine having the undercut processing mechanism incorporated therein is also increased.

### SUMMARY OF THE INVENTION

An object of the present invention is to provide an undercut processing mechanism that has a smaller number of components, is compact in size, and is easily incorporated into a mold, and a molding machine including such an undercut processing mechanism.

An undercut processing mechanism according to the present invention is attached to and used in a molding machine including a stationary die and a movable die for forming a molded product having an undercut portion, in which the molded product having the undercut portion has a tubular projection that projects from a molded product body, and the undercut portion is a bulge formed on an outer circumferential surface of the projection,
the undercut processing mechanism including:
a core pin configured to form an inner circumferential surface of the projection;
a slide core configured to form the outer circumferential surface of the projection;
a sliding piece connected to the core pin and configured to cause the core pin to advance/retract in an axial direction of the projection;
a retaining piece slidably engaged with the sliding piece and configured to cause the sliding piece to advance/retract;
a holder fixed to or formed integrally with the stationary die or the movable die, the holder accommodating the retaining piece such that the retaining piece can advance/retract; and
a movement amount restrictor configured to restrict a movement amount of the core pin, wherein
the holder has a sliding piece guide configured to guide movement of the sliding piece such that the core pin can advance/retract in the axial direction of the projection,
the retaining piece is configured to be able to advance/retract in a state where the stationary die and the movable die are closed, and
when the core pin retracts in conjunction with retraction of the retaining piece and a movement amount of the core pin reaches a distance restricted by the movement amount restrictor, the core pin and the slide core are engaged with each other via the movement amount restrictor and the core pin and the slide core retract together, thereby allowing the undercut portion to be demolded.

In the undercut processing mechanism according to the present invention, the stationary die or the movable die, to which the holder is fixed or with which the holder is formed integrally, may have a movable body that is movable in an opening/closing direction of the molding machine, the movable body may be configured to be able to advance/retract in a state where the stationary die and the movable die are closed, and the retaining piece may have a proximal end portion fixed to the movable body.

In the undercut processing mechanism according to the present invention, the movable body may be a stationary-side attachment plate provided so as to be movable relative to a stationary-side die plate, or a movable-side receiving plate provided so as to be movable relative to a movable-side die plate.

In the undercut processing mechanism according to the present invention, the core pin, the slide core, the sliding piece, the retaining piece, the holder and the movement amount restrictor may be configured as a single unit.

A molding machine according to the present invention includes a stationary die, a movable die and the undercut processing mechanism according to the present invention.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a plan view for explaining the configuration of an undercut processing mechanism according to a first embodiment of the present invention;
Fig. 2A is a cross-sectional view in a state where a mold is closed and a stationary-side attachment plate and a stationary-side die plate are closed, as seen from a cutting plane line IIA-IIA in Fig. 1;
Fig. 2B is an enlarged view of a portion IIB in Fig. 2A;
Fig. 3 is a cross-sectional view as seen from a cutting plane line III-III in Fig. 2A;
Fig. 4 is a cross-sectional view as seen from a cutting plane line IV-IV in Fig. 3;
Fig. 5A is a cross-sectional view when a core pin 11 is retracted, as seen from a cutting plane line IIA-IIA in Fig. 1;
Fig. 5B is an enlarged view of a portion VB in Fig. 5A;
Fig. 6 is a cross-sectional view as seen from a cutting plane line VI-VI in Fig. 5A;
Fig. 7 is a cross-sectional view as seen from a cutting plane line VII-VII in Fig. 6;
Fig. 8A is a cross-sectional view when a slide core is retracted, as seen from a cutting plane line IIA-IIA in Fig. 1;
Fig. 8B is an enlarged view of a portion VIIIB in Fig. 8A; and
Fig. 9 is a cross-sectional view when the slide core is retracted, as seen from a cutting plane line IV-IV in Fig. 3.

### DESCRIPTION OF EMBODIMENTS

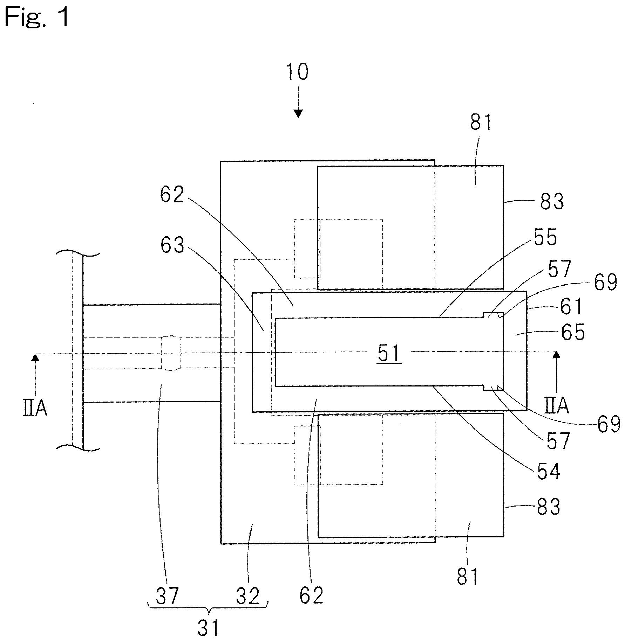

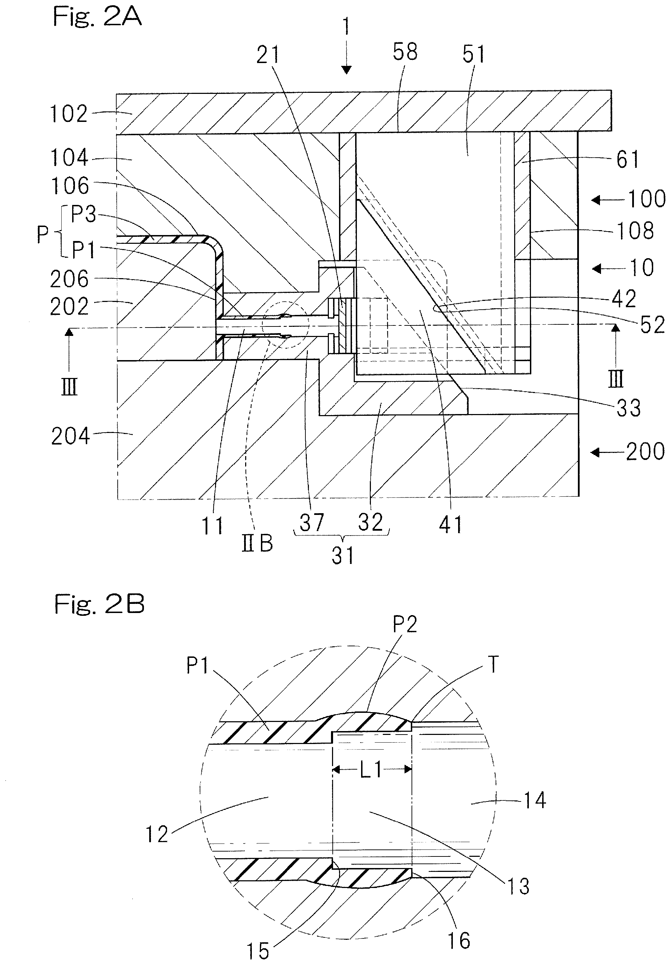

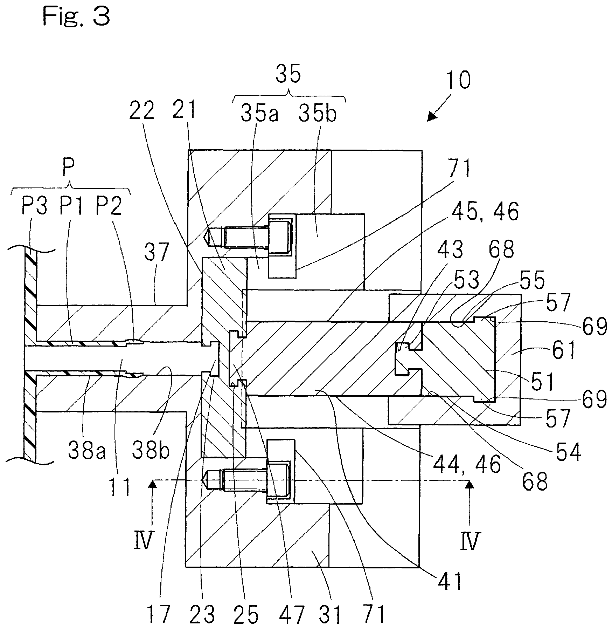

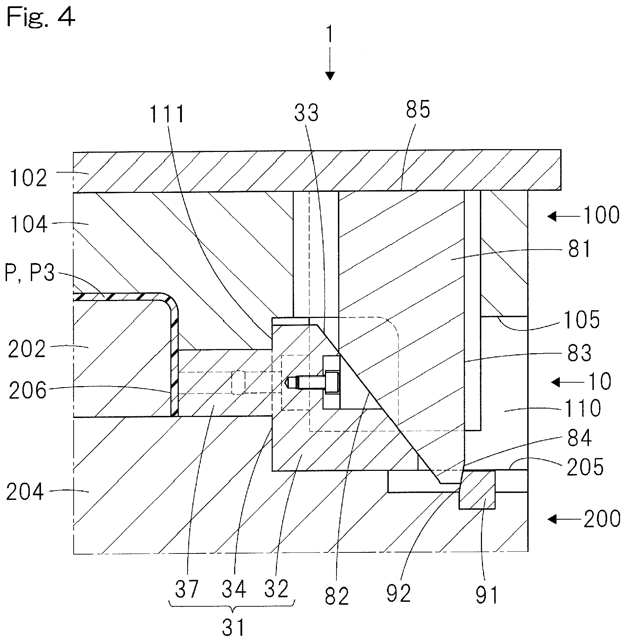

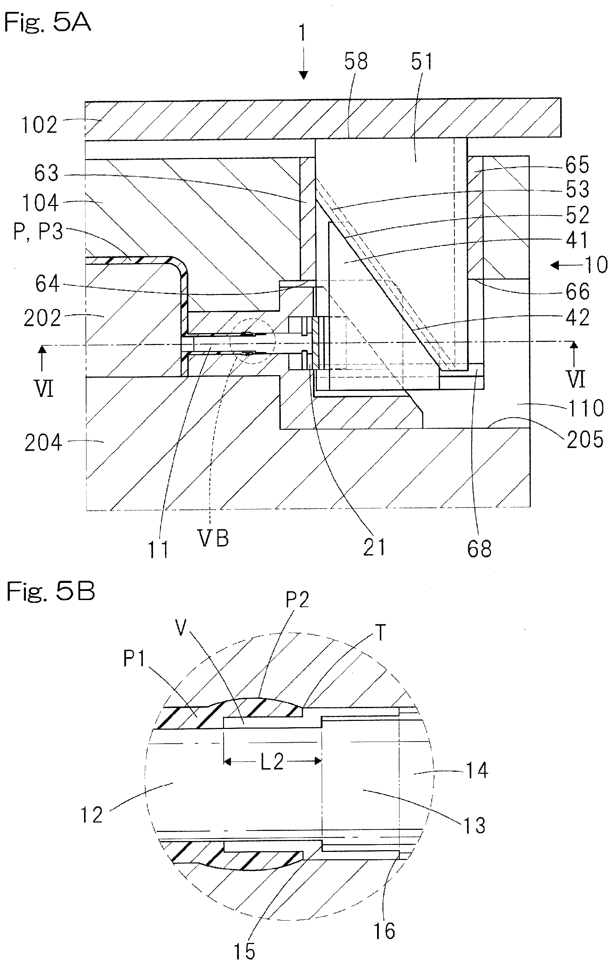

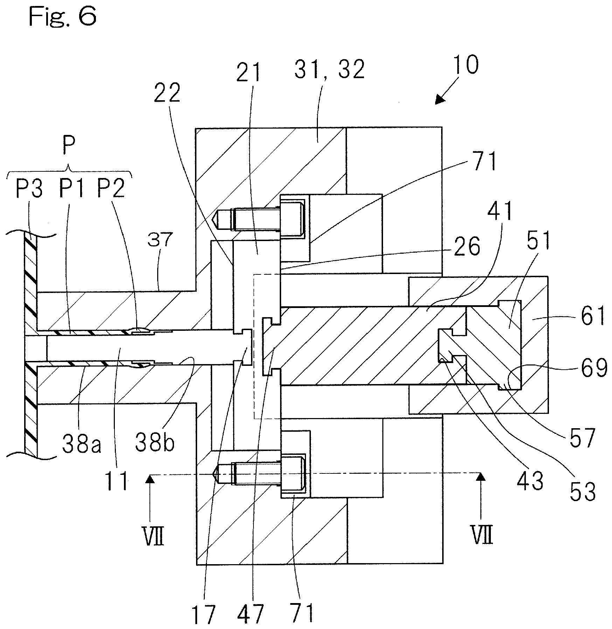

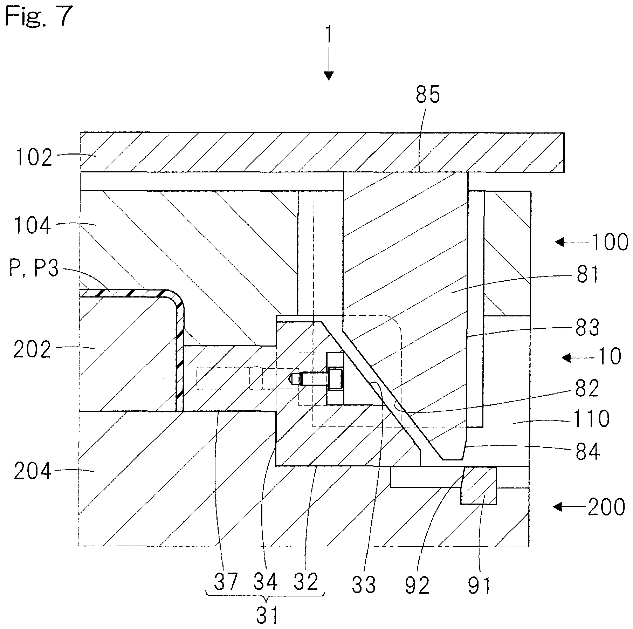

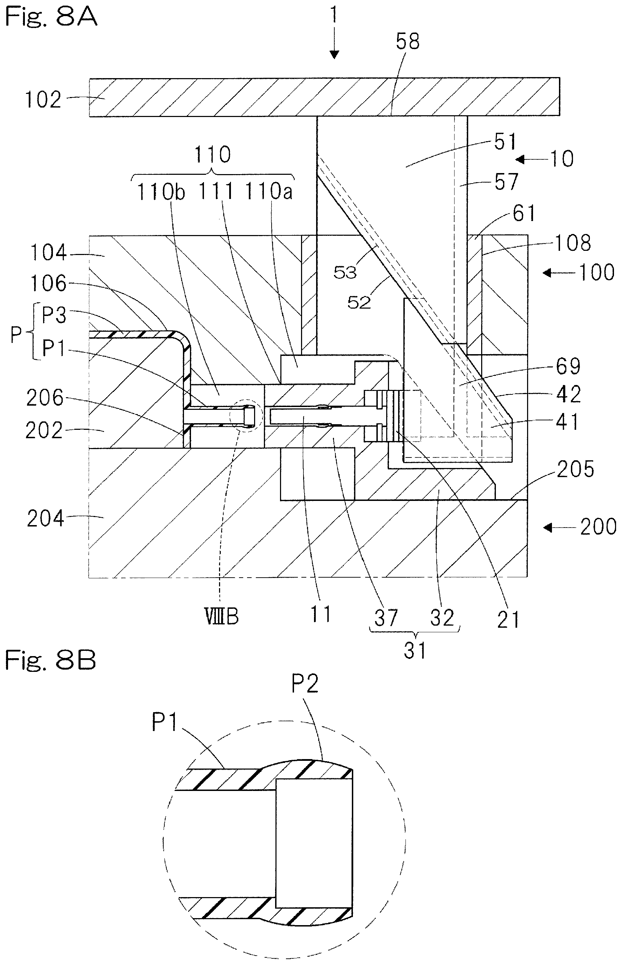

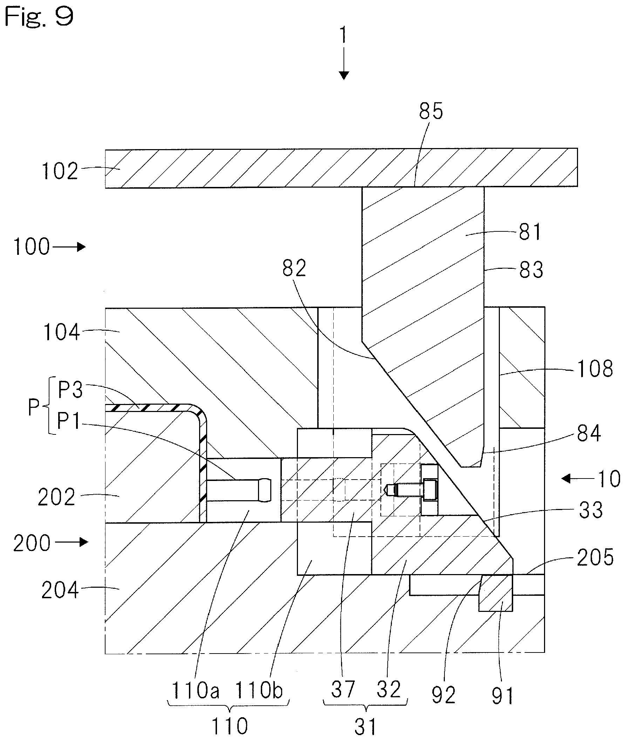

Fig. 1 is a plan view for explaining the configuration of an undercut processing mechanism 10 according to a first embodiment of the present invention. Fig. 2A is a cross-sectional view in a state where a mold is closed and a stationary-side attachment plate 102 and a stationary-side die plate 104 are closed, as seen from a cutting plane line IIA-IIA in Fig. 1. Fig. 2B is an enlarged view of a part of Fig. 2A. Fig. 3 is a cross-sectional view as seen from a cutting plane line III-III in Fig. 2A. Fig. 4 is a cross-sectional view as seen from a cutting plane line IV-IV in Fig. 3. Fig. 5A is a cross-sectional view when a core pin 11 is retracted, as seen from a cutting plane line IIA-IIA in Fig. 1. Fig. 5B is an enlarged view of a part of Fig. 5A. Fig. 6 is a cross-sectional view as seen from a cutting plane line VI-VI in Fig. 5A. Fig. 7 is a cross-sectional view as seen from a cutting plane line VII-VII in Fig. 6. Fig. 8A is a cross-sectional view when a slide core 31 is retracted, as seen from a cutting plane line IIA-IIA in Fig. 1. Fig. 8B is an enlarged view of a part of Fig. 8A. Fig. 9 is a cross-sectional view when the slide core 31 is retracted, as seen from a cutting plane line IV-IV in Fig. 3.

In the present embodiment, regarding a direction, the stationary die 100 side in Fig. 2A is defined as an upper side, and the movable die 200 side in Fig. 2A is defined as a lower side. The molded product P side in Fig. 2A is defined as a left side, and a side opposite thereto is defined as a right side. The right-left direction in Fig. 2A is defined as a horizontal direction, and a direction perpendicular thereto is defined as a vertical direction. Moreover, in the present embodiment, the axis of a projecting tubular projection P1 of a molded product P is horizontal.

The undercut processing mechanism 10 according to the first embodiment of the present invention is attached to and used in a molding machine 1 that is used for forming the molded product P, such as a nipple component, having undercut portions P1 and P2 and includes a stationary die 100 and a movable die 200. The molded product P has a cross-sectional shape shown in Fig. 8A and Fig. 8B, and has the tubular projection P1 that projects so as to be perpendicular to a molded product body P3. An annular bulge P2 is formed on the outer circumferential surface of a distal end portion of the tubular projection P1. In the present embodiment, the tubular projection P1 extends in the horizontal direction from the side surface of the molded product body P3, the bulge P2 bulges in the vertical direction, and these portions form an undercut portion. The material of the molded product P may not necessarily be a synthetic resin such as plastic but may be a metal such as iron or copper.

The molding machine 1 has: the stationary die 100 that is located at the upper side of the molded product P; the movable die 200 that is located at the lower side of the molded product P and is movable in the demolding direction of the molded product P; and the undercut processing mechanism 10 for forming the undercut portion.

The stationary die 100 has a stationary-side attachment plate 102 and a stationary-side die plate 104 for forming the outer circumferential surface of the molded product P. The stationary-side die plate 104 is attached to the stationary-side attachment plate 102 via a drive means (not shown) such that the stationary-side die plate 104 can be attached to/detached from (advance/retract relative to) the stationary-side attachment plate 102. The drive means (not shown) is formed by, for example, a spring that is connected to the stationary-side attachment plate 102 and the stationary-side die plate 104 and biases the stationary-side die plate 104 away from the stationary-side attachment plate 102, and a stop bolt that restricts a separation distance between the stationary-side attachment plate 102 and the stationary-side die plate 104.

The stationary-side die plate 104 has a cavity surface 106 for forming the outer surface of the molded product body P3, and further has a holder housing portion 108 that penetrates the stationary-side die plate 104 in the vertical direction near the cavity surface 106. A later-described holder 61 is attached to the holder housing portion 108.

The movable die 200 has a movable-side die plate 204 and a movable-side insert 202 fixed to the movable-side die plate 204. A core surface 206 for forming the inner surface of the molded product body P3 is provided on the outer circumference of the movable-side insert 202.

The molding machine 1 has a slide core housing portion 110 (see Fig. 4) in which the slide core 31 is housed in a state where the stationary die 100 and the movable die 200 are closed. The slide core housing portion 110 is provided between a bottom surface 105 of the stationary-side die plate 104 and an upper surface 205 of the movable-side die plate 204. The slide core housing portion 110 includes: a base housing portion 110a in which a slide core base 32 is housed; and a molding portion housing portion 110b in which a molding portion 37 of the slide core 31 is housed (see Fig. 8A). The base housing portion 110a and the molding portion housing portion 110b communicate with each other, and a step 111 is formed at the boundary between the base housing portion 110a and the molding portion housing portion 110b.

The base housing portion 110a also communicates with the holder housing portion 108 (see Fig. 8A), and a lower portion of the holder 61, a sliding piece 41, a retaining piece 51, and further a part of a cotter 81 are housed therein in addition to the slide core base 32.

The undercut processing mechanism 10 includes: the core pin 11 for forming the inner circumferential surface of the tubular projection P1; a pulling piece 21 connecting the core pin 11 to the sliding piece 41; the slide core 31 including the molding portion 37 for forming the outer circumferential surface of the tubular projection P1; the sliding piece 41 that causes the core pin 11 to advance/retract in the axial direction of the tubular projection P1; the retaining piece 51 that is slidably engaged with the sliding piece 41 and causes the sliding piece 41 to advance/retract; the holder 61 for accommodating the retaining piece 51 such that the retaining piece 51 can advance/retract; and a movement amount restrictor for restricting a movement amount of the core pin 11.

The undercut processing mechanism 10 according to the present embodiment further includes: the cotter 81 that positions the slide core 31 and prevents the slide core 31 from being displaced; and a locking block 91 that positions the cotter 81 and prevents the cotter 81 from being displaced. The cotter 81 and the locking block 91 are arranged in a compact manner. In addition, the core pin 11, the pulling piece 21, the slide core 31, the sliding piece 41, the retaining piece 51, the holder 61 and the movement amount restrictor of the undercut processing mechanism 10 are configured as a single unit. Thus, the undercut processing mechanism 10 is easily incorporated into the molding machine 1, and the molding machine 1 having the undercut processing mechanism 10 incorporated therein is also compact.

The core pin 11 is a columnar member for forming the inner circumferential surface of the tubular projection P1, and includes: a first molding portion 12 for forming the inner circumferential surface of the tubular projection P1 excluding the bulge P2 of the tubular projection P1; and a second molding portion 13 having a length L1 for forming the inner circumferential surface of the bulge P2. The first molding portion 12 is located at the front end (left side) from a center portion, and the second molding portion 13 is provided so as to be connected to the rear end of the first molding portion 12.

In the core pin 11, the outer diameter of the second molding portion 13 is smaller than that of a body portion 14 located at the terminal end (right side) from the center, and the outer diameter of the first molding portion 12 is smaller than that of the second molding portion 13. Thus, two steps 15 and 16 are formed at the center portion of the core pin 11. A flange 17 for connecting to the pulling piece 21 is provided at the terminal end of the core pin 11.

The pulling piece 21 is an elongated block-like member that connects the core pin 11 to the sliding piece 41. Dovetail grooves 23 and 25, into which the flange 17 provided to the core pin 11 and a flange 47 provided at a front end portion of the sliding piece 41 are fitted, respectively, are formed on the pulling piece 21. The core pin 11 is connected to the pulling piece 21 by fitting the flange 17 into the dovetail groove 23, and the sliding piece 41 is connected to the pulling piece 21 by fitting the flange 47 into the dovetail groove 25. The pulling piece 21 has a width (length in the up-down direction in Fig. 3) larger than the width (length in the up-down direction in Fig. 3) of the holder 61, and is slidably fitted into a housing portion 35 provided in the slide core 31.

The slide core 31 includes the base 32 and the molding portion 37 provided at the front side (left side in Fig. 2A) of the base 32. The base 32 is a rectangular block-like member, and has an inclined surface 33 obtained by obliquely cutting the rear end (the right side in Fig. 2A) in a front view (see Fig. 4). The housing portion 35, composed of a recess in which the pulling piece 21 and the sliding piece 41 are housed, is provided in the center portion of the base 32. The housing portion 35 includes: a first housing portion 35a into which the pulling piece 21 is slidably fitted; and a second housing portion 35b into which a lower portion of the sliding piece 41 enters (see Fig. 3). The second housing portion 35b is located at the rear end side (right side) of the first housing portion 35a and communicates with the first housing portion 35a. The width (length in the up-down direction in Fig. 3) of the second housing portion 35b is larger than that of the first housing portion 35a.

The molding portion 37 forms the outer circumferential surface of the tubular projection P1 and a part of the outer circumferential surface of the molded product body P3 (see Fig. 2A). A first molding portion 38a corresponding to the outer shape of the tubular projection P1, and a second molding portion 38b corresponding to the outer shape of the body portion 14 of the core pin 11 inserted into the annular projection P1 are provided in the center portion of the molding portion 37 (see Fig. 3). The first molding portion 38a and the second molding portion 38b communicate with each other and form a hole that penetrates the molding portion 37.

The sliding piece 41 is slidably engaged with the retaining piece 51 and causes the core pin 11, which is connected thereto via the pulling piece 21, to advance/retract in the axial direction of the tubular projection P1 in conjunction with advance/retraction of the retaining piece 51. The sliding piece 41 is a rectangular block-like member, has an inclined surface 42 obtained by obliquely cutting the rear end (the right side in Fig. 5A) in a front view, and has a substantially triangular shape with an elongated base (see Fig. 5A and Fig. 8A).

A dovetail groove 43, into which an engagement projection 53 provided on an inclined surface 52 of the retaining piece 51 is slidably fitted, is provided on the inclined surface 42 of the sliding piece 41. The sliding piece 41 and the retaining piece 51 are slidably engaged with each other by the engagement projection 53 being fitted into the dovetail groove 43. In addition, the sliding piece 41 has guide projections 46 on a front surface 44 (upper surface in Fig. 3) and a back surface 45 (lower surface in Fig. 3) thereof. The guide projections 46 are fitted into sliding piece guides composed of recessed grooves 68 provided at the inner side of a front-side wall surface 62 and the inner side of a back-side wall surface 62 of the holder 61. In addition, the flange 47 for connecting to the pulling piece 21 is provided at the front surface (left surface in Fig. 3) of the sliding piece 41.

The retaining piece 51 is housed in the holder 61, is slidably engaged with the sliding piece 41, and causes the sliding piece 41 to advance/retract. The retaining piece 51 is a rectangular block-like member, has the inclined surface 52 obtained by obliquely cutting a front lower portion (left lower portion in Fig. 5A) in a front view, and has a trapezoidal shape with an elongated upper side (see Fig. 2A and Fig. 8A). The engagement projection 53, which is slidably fitted into the dovetail groove 43 provided on the inclined surface 42 of the sliding piece 41, is provided on the inclined surface 52 of the retaining piece 51 (see Fig. 5A and Fig. 8A).

The inclination angle of the inclined surface 52 of the retaining piece 51 can be set to an optimum angle as appropriate in consideration of a space in which the undercut processing mechanism is mounted, a stroke of the stationary-side attachment plate 102, or the like. The means for engaging the sliding piece 41 and the retaining piece 51 with each other is not limited to the means using the engagement projection 53 and the dovetail groove 43, and, for example, a linear guide or the like may be used. In short, the means for engaging the sliding piece 41 and the retaining piece 51 with each other may be any means that is possible to slidably engage the sliding piece 41 and the retaining piece 51 with each other. When the advancing/retracting direction of the sliding piece 41 is made perpendicular to the advancing/retracting direction of the retaining piece 51 as in the present embodiment, the undercut processing mechanism can be made compact.

Engagement projections 57 that are fitted into retaining piece guides provided to the holder 61 are provided on a rear portion of a front surface 54 and a rear portion of a back surface 55 of the retaining piece 51. The retaining piece guides are composed of recessed grooves 69 provided on the inner surface of a front-side side wall (front-side wall surface) 62 and the inner surface of a back-side side wall (back-side wall surface) 62 of the holder 61. In a state where the engagement projections 57 are fitted into the retaining piece guides 69 provided to the holder 61, a proximal end portion 58 (upper side in Fig. 2A) of the retaining piece 51 is fixed to the stationary-side attachment plate 102. In a state where the stationary die 100 and the movable die 200 are closed, the retaining piece 51 advances/retracts along the retaining piece guides 69 in the holder 61 in conjunction with up/down movement of the stationary-side attachment plate 102.

The retaining piece 51 is housed in the holder 61 such that the retaining piece 51 can advance/retract, and the holder 61 guides the sliding piece 41 in the axial direction of the undercut portion P1. The holder 61 is formed by combining a pair of members having substantially U cross-sectional shapes that are symmetrical to each other, and has a box shape that is open at an upper end surface and a lower end surface thereof and has an internal space. A front-side wall surface (left wall surface in Fig. 5A) 63 of the holder 61 has a height that is substantially half that of the front-side and back-side wall surfaces 62 (Fig. 1), and a lower portion of the front-side wall surface 63 serves as an inlet and an outlet for the pulling piece 21. In addition, a rear-side wall surface (right wall surface in Fig. 5A) 65 also has a height that is substantially half that of the front-side and back-side wall surfaces 62, and a lower portion of the rear-side wall surface 65 serves as an outlet for the sliding piece 41 (see Fig. 8A).

The holder 61 is fixed to the holder housing portion 108 provided in the stationary-side die plate 104. At this time, a lower end 64 of the front-side wall surface 63 and a lower end 66 of the rear-side wall surface 65 of the holder 61 are flush with the lower end of the holder housing portion 108 provided in the stationary-side die plate 104.

The sliding piece guides 68 and the retaining piece guides 69 are provided on the inner surface of the front-side wall surface 62 and the inner surface of the back-side wall surface 62 of the holder 61 shown in Fig. 1. The sliding piece guides 68 are composed of the recessed grooves 68 provided on lower portions of the inner surface of the front-side wall surface 62 and the inner surface of the back-side wall surface 62 so as to extend horizontally (see Fig. 5A). The retaining piece guides 69 are composed of the recessed grooves 69 provided at the right ends of the inner surface of the front-side wall surface 62 and the inner surface of the back-side wall surface 62 so as to extend vertically.

The sliding piece guides 68 are formed over the entire widths of the inner surface of the front-side wall surface 62 and the inner surface of the back-side wall surface 62, but are not limited thereto and may be formed in any manner as long as the sliding piece guides 68 can guide the sliding piece 41 in the demolding direction of the undercut portion P1 from a molding position shown in Fig. 2A to a releasing position shown in Fig. 8A.

The sliding piece guides 68 are not limited to guides having recessed groove cross-sectional shapes, and may be, for example, projection portions, dovetail grooves, engagement projections or the like, or linear guides may be provided on the inner surface of the front-side wall surface 62 and the inner surface of the back-side wall surface 62 of the holder 61. In short, the sliding piece guides 68 may have any configuration as long as the sliding piece guides 68 can guide the sliding piece 41 in the demolding direction of the undercut portion P1. The sliding piece 41, which is guided by the sliding piece guides 68, may also be optimally configured as appropriate in accordance with the configurations of the sliding piece guides 68. The same applies to the retaining piece guides 69 and the retaining piece 51.

The configuration of the holder 61 is not limited to the specific configuration, and may be formed by a single square tube member or may be formed by three or more holder members (not shown). In addition, the holder 61 may be formed as a part of the stationary die 100.

The movement amount restrictor is operable restrict a movement amount of the core pin 11. In the present embodiment, the movement amount restrictor is formed by the pulling piece 21 and a stopper 71 attached to the slide core 31. The stopper 71 is attached to a corner portion formed by the second housing portion 35b and the first housing portion 35a of the slide core 31, and a part thereof projects toward the center portion of the first housing portion 35a (see Fig. 3). Accordingly, a movement amount of the core pin 11 is restricted by the pulling piece 21 coming into contact with the stopper 71 via the sliding piece 41.

The cotter 81 is operable to position the slide core 31 and to prevent the slide core 31 from being displaced. The cotter 81 is formed as a rectangular block-like member, has an inclined surface 82 obtained by obliquely cutting a front lower portion (left lower portion in Fig. 4), and has a trapezoidal shape with an elongated upper side (see Fig. 7). The inclined surface 82 of the cotter 81 is provided such that, in a mold-closed state where the stationary die 100 and the movable die 200 are closed and further the stationary-side attachment plate 102 is in contact with the stationary-side die plate 104, the inclined surface 82 is in contact with the inclined surface 33 of the slide core 31 (see Fig. 4).

A rear-side wall surface 83 (right wall surface in Fig. 4) of the cotter 81 has an inclined surface 84 in which a lower portion thereof is inclined inward (leftward). The cotter 81 can position itself and prevent itself from being displaced, by moving downward while the inclined surface 84 slides on an inclined surface 92 of the locking block 91.

The cotter 81 is disposed on both sides of the holder 61 with the holder 61 interposed therein (see Fig. 1), and a proximal end portion 85 (the upper side in Fig. 2A) of the cotter 81 is fixed to the stationary-side attachment plate 102. Thus, the cotter 81 is movable together with the retaining piece 51 in conjunction with up/down movement of the stationary-side attachment plate 102 in a state where the stationary die 100 and the movable die 200 are closed. Since the cotter 81 is disposed as described above, the molding machine 1 can be made compact.

The locking block 91 is operable to position the cotter 81 and to prevent the cotter 81 from being displaced in a mold-closed state where the stationary die 100 and the movable die 200 are closed and further the stationary-side attachment plate 102 is in contact with the stationary-side die plate 104. The locking block 91 is formed as a block-like member and is fixed to the movable-side die plate 204 (see Fig. 4). The locking block 91 has the inclined surface 92 in which an upper region, from the center to an upper end, of the front-side wall surface (left wall surface in Fig. 4) thereof is inclined rightward.

The undercut processing mechanism 10 is assembled in the following manner. The core pin 11 is fitted into the first molding portion 38a and the second molding portion 38b of the molding portion 37 of the slide core 31, and the flange 17 provided to the core pin 11 is fitted into the dovetail groove 23 provided on the pulling piece 21. In this state, the pulling piece 21 is fitted into the first housing portion 35a of the slide core 31.

In a state where the engagement projection 53 provided on the inclined surface 52 of the retaining piece 51 is fitted into the dovetail groove 43 provided on the inclined surface 42 of the sliding piece 41, the guide projections 46 provided on the sliding piece 41 are fitted into the recessed grooves 68 provided on the holder 61. In addition, the engagement projections 57 provided on the retaining piece 51 are fitted into the recessed grooves 69 provided on the holder 61.

Furthermore, the flange 47 provided at the distal end portion of the sliding piece 41 is fitted into the dovetail groove 25 provided on the pulling piece 21. Accordingly, the core pin 11 and the sliding piece 41 are linearly connected to each other via the pulling piece 21.

The undercut processing mechanism 10 configured as described above is attached to the molding machine 1 such that the slide core 31 is fitted into the slide core housing portion 110 provided in the stationary die 100 and the movable die 200.

Operation of the undercut processing mechanism 10 will be described. Here, the molding machine 1 is formed as an injection molding machine. The undercut processing mechanism 10 pulls out an undercut portion through a two-step operation called two-step pulling.

During injection, the molding machine 1 is in a state shown in Fig. 2A to Fig. 4 where the molding machine 1 is closed and the stationary-side attachment plate 102 and the stationary-side die plate 104 are in contact with each other. The mold-closed state refers to a state where the stationary die 100 and the movable die 200 are in contact with each other and a partition surface is closed.

In the state shown in Fig. 2A to Fig. 4, the undercut processing mechanism 10 is located such that the retaining piece 51 is lowered most. Accordingly, the sliding piece 41 engaged with the retaining piece 51 is pushed leftward, and a front surface (left surface) 22 of the pulling piece 21 connected to the sliding piece 41 is brought into contact with the wall surface of the first housing portion 35a provided in the slide core 31. The core pin 11 is in a state where the core pin 11 is most deeply inserted into the molding portion 37 of the slide core 31. Accordingly, the core pin 11 is positioned and prevented from being displaced.

In addition, in the state shown in Fig. 2A to Fig. 4, the cotter 81 is also located such that the cotter 81 is most lowered. The most lowered cotter 81 moves the slide core 31 to the frontmost side (leftmost side) by bringing the inclined surface 82 into contact with the inclined surface 33 of the base 32 of the slide core 31. Simultaneously, the cotter 81 brings the inclined surface 84 into contact with the inclined surface 92 of the locking block 91. The slide core 31 is pushed leftward by the cotter 81, and a front surface 34 (left side) thereof is brought into contact with the step 111 between the base housing portion 110a and the molding portion housing portion 110b. Accordingly, the slide core 31 is positioned and also prevented from moving.

In the state in Fig. 2A to Fig. 4, a molten resin is injected, and the molded product P is taken out through pressure-keeping and cooling. In the molded product P according to the present embodiment, the projection P1 and the bulge P2 form an undercut portion. Thus, before the molded product P is taken out, it is necessary to pull out the undercut portion. The undercut portion is demolded in the following manner.

In the mold-closed state, the stationary-side die plate 104 and the movable die 200 are lowered relative to the stationary-side attachment plate 102 via a drive means (not shown). The cotter 81 is fixed to the stationary-side attachment plate 102, and the slide core 31 is interposed between the stationary-side die plate 104 and the movable-side die plate 204. Therefore, when the stationary-side die plate 104 and the movable die 200 are lowered relative to the stationary-side attachment plate 102, the contact between the inclined surface 82 of the cotter 81 and the inclined surface 33 of the base 32 of the slide core 31 is released (see Fig. 7).

Simultaneously, the retaining piece 51 is fixed to the stationary-side attachment plate 102 and the holder 61 is fixed to the stationary-side die plate 104. Therefore, when the stationary-side die plate 104 and the movable die 200 are lowered relative to the stationary-side attachment plate 102, the retaining piece 51 is lifted relative to the holder 61. Accordingly, the sliding piece 41 engaged with the retaining piece 51 retracts (moves rightward) along the sliding piece guides (recessed grooves) 68 provided to the holder 61.

The sliding piece guides 68 are provided such that the sliding piece guides 68 allow the core pin 11, which is connected to the sliding piece 41 via the pulling piece 21, to move in the axial direction of the tubular projection P1. Thus, when the retaining piece 51 is relatively lifted, the core pin 11 moves rightward (retracts) in the axial direction of the tubular projection P1.

When the core pin 11 retracts by a length L2 (see Fig. 5B), a rear surface 26 of the pulling piece 21 comes into contact with the stopper 71 (see Fig. 6). The length L2 is set so as to be slightly longer than the length L1 for forming the inner circumferential surface of the bulge P2 (Fig. 2B). Therefore, at this time point, in the core pin 11, the step 15, which forms the distal end of the second molding portion 13, is retracted relative to an end portion T of the bulge P2, and a space V is formed between the bulge P2 and the core pin 11 (see Fig. 5B). Until the pulling piece 21 comes into contact with the stopper 71, the slide core 31 does not retract and only the core pin 11 retracts.

Furthermore, when the stationary-side die plate 104 and the movable die 200 are lowered, since the pulling piece 21 shown in Fig. 3 is engaged with the stopper 71, the slide core 31 retracts (moves rightward) integrally with the pulling piece 21 while sliding on the wall surface of the slide core housing portion 110.

With the retraction of the slide core 31, the first molding portion 38a of the slide core 31 moves on the bulge P2. The inner diameter of the first molding portion 38a is smaller than the outer diameter of the bulge P2, but the space V is formed between the bulge P2 and the core pin 11. Thus, the first molding portion 38a can move past on the bulge P2 as the bulge P2 becomes elastically deformed to the core pin 11 side. When the first molding portion 38a of the slide core 31 moves on the bulge P2, the first molding portion 12 of the core pin 11 is present at the inner side of the bulge P2, and therefore, deformation of the bulge P2 to the core pin 11 side is restricted, so that breakage or deformation of the bulge P2 can be prevented.

Setting is made such that, when the stationary-side die plate 104 and the movable die 200 are lowered the most, the slide core 31 is completely pulled out from the tubular projection P1. Through these operations, the undercut portion can be demolded in a state where the stationary die 100 and the movable die 200 are closed.

When demolding of the undercut portion is completed, the stationary die 100 and the movable die 200 are opened, and the molded product P is taken out.

As described above, the undercut processing mechanism according to the present embodiment has a smaller number of components and also has a simple configuration. In addition, since the undercut processing mechanism is made compact to be unitized, it is easy to incorporate the undercut processing mechanism into the molding machine. Moreover, the undercut processing mechanism according to the present embodiment can be produced at low cost.

The undercut processing mechanism and the molding machine according to the present invention are not limited to the above embodiment, and may be modified without departing from the gist of the invention, and the modified ones can be used. In the molding machine according to the above embodiment, the holder 61 and the stationary die 100 are separate from each other, and the holder 61 is attached to the stationary die 100. However, the holder 61 may be provided directly to the stationary die 100.

In the above embodiment, the sliding piece 41 and the retaining piece 51 are arranged such that the advancing/retracting direction of the sliding piece 41 and the advancing/retracting direction of the retaining piece 51 are perpendicular to each other, but the arrangement of the sliding piece 41 and the retaining piece 51 is not limited thereto. The sliding piece 41 and the retaining piece 51 may be arranged such that the advancing/retracting direction of the sliding piece 41 and the advancing/retracting direction of the retaining piece 51 cross each other.

In the above embodiment, the stationary-side attachment plate 102 and the stationary-side die plate 104 are configured to be attachable and detachable, and the retaining piece 51 is attached to the stationary-side attachment plate 102, thereby allowing the core pin 11 and the slide core 31 to advance/retract via the retaining piece 51 in a state where the stationary die 100 and the movable die 200 are closed. However, the component to which the retaining piece 51 is attached is not limited to the stationary-side attachment plate 102, and may be another member as long as the core pin 11 and the slide core 31 can be caused to advance/retract via the retaining piece 51 in a state where the stationary die 100 and the movable die 200 are closed.

Although in the above embodiment, the holder 61 is attached to the stationary die 100, the holder 61 may be attached to the movable die 200, or the holder 61 may be provided directly to the movable die 200. In this case, a movable-side receiving plate (not shown) can be configured to be able to advance/retract relative to the movable-side die plate 204, the holder 61 may be attached to the movable-side die plate 204, and the retaining piece 51 may be attached to the movable-side receiving plate (not shown).

In the molding machine according to the above embodiment, the stationary die 100 and the movable die 200 may be reversed with each other. That is, in the molding machine 1, the stationary die 100 may move vertically, and the movable die 200 may be immovable. Furthermore, the undercut processing mechanism and the molding machine according to the present invention are applicable to a mold that is opened and closed in the horizontal direction, the vertical direction, or another direction.

The shape of the holder of the undercut processing mechanism according to the present invention is not limited to the square tube shape, and may be, for example, a cylindrical shape. In this case, the shapes of the retaining piece and the sliding piece may be determined as appropriate according to the shape of the holder.

In the undercut processing mechanism and the molding machine of the present invention, the corner and the side edge of each component may be, for example, rounded or chamfered. In addition, the materials of the components used in the undercut processing mechanism and the molding machine of the present invention are not limited to specific materials, and the same materials as those of components which are used in known undercut processing mechanisms and molding machines may be used as appropriate. However, the sliding surface of each component is preferably formed from a material having good slidability or a material that has been subjected to favorable surface treatment. Each sliding surface is not limited to a surface brought into surface contact and may be a surface brought into line contact or point contact.

The molded product (undercut portion) that can be formed by the undercut processing mechanism and the molding machine according to the present invention is not limited to a molded product (undercut portion) shown in the above embodiment, and such a molded product may include a molded product having two or more projections P1 aligned on a molded product body P3, and a nipple having a plurality of bulges P2 provided on one projection P1.

The undercut portion that can be processed by the undercut processing mechanism according to the present invention is not limited to an undercut portion that projects in a direction perpendicular to the demolding direction of the molded product, and such a undercut portion may include an undercut portion that projects so as to obliquely intersect the demolding direction of the molded product.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### Reference Numerals

- 1: molding machine
- 10: undercut processing mechanism
- 11: core pin
- 12: first molding portion
- 13: second molding portion
- 21: pulling piece
- 31: slide core
- 32: base
- 35: housing portion
- 37: molding portion
- 41: sliding piece
- 42: inclined surface
- 43: dovetail groove
- 46: guide projection
- 51: retaining piece
- 52: inclined surface
- 53: engagement projection
- 57: engagement projection
- 61: holder
- 68: sliding piece guide (recessed groove)
- 69: retaining piece guide (recessed groove)
- 71: stopper
- 81: cotter
- 91: locking block
- 100: stationary die
- 102: stationary-side attachment plate
- 104: stationary-side die plate
- 108: holder housing portion
- 110: slide core housing portion
- 200: movable die
- 202: movable-side insert
- 204: movable-side die plate
- P: molded product
- P1: projection
- P2: bulge
- P3: molded product body
- L1: core pin second molding portion length

## Claims

1. An undercut processing mechanism that is attached to and used in a molding machine including a stationary die and a movable die for forming a molded product having an undercut portion, in which the molded product having the undercut portion has a tubular projection that projects from a molded product body, and the undercut portion is a bulge formed on an outer circumferential surface of the projection,
the undercut processing mechanism comprising:
a core pin configured to form an inner circumferential surface of the projection;
a slide core configured to form the outer circumferential surface of the projection;
a sliding piece connected to the core pin and configured to cause the core pin to advance/retract in an axial direction of the projection;
a retaining piece slidably engaged with the sliding piece and configured to cause the sliding piece to advance/retract;
a holder fixed to or formed integrally with the stationary die or the movable die, the holder accommodating the retaining piece such that the retaining piece can advance/retract; and
a movement amount restrictor configured to restrict a movement amount of the core pin, wherein
the holder has a sliding piece guide configured to guide movement of the sliding piece such that the core pin can advance/retract in the axial direction of the projection, wherein
the retaining piece is configured to be able to advance/retract in a state where the stationary die and the movable die are closed, and
when the core pin retracts in conjunction with retraction of the retaining piece and a movement amount of the core pin reaches a distance restricted by the movement amount restrictor, the core pin and the slide core are engaged with each other via the movement amount restrictor and the core pin and the slide core retract together, thereby allowing the undercut portion to be demolded.

2. The undercut processing mechanism as claimed in claim 1, wherein
the stationary die or the movable die, to which the holder is fixed or with which the holder is formed integrally, has a movable body that is movable in an opening/closing direction of the molding machine,
the movable body is configured to be able to advance/retract in a state where the stationary die and the movable die are closed, and
the retaining piece has a proximal end portion fixed to the movable body.

3. The undercut processing mechanism as claimed in claim 2, wherein the movable body is a stationary-side attachment plate provided so as to be movable relative to a stationary-side die plate, or a movable-side receiving plate provided so as to be movable relative to a movable-side die plate.

4. The undercut processing mechanism as claimed in any one of claims 1 to 3, wherein the core pin, the slide core, the sliding piece, the retaining piece, the holder and the movement amount restrictor are configured as a single unit.

5. A molding machine comprising:
a stationary die;
a movable die; and
the undercut processing mechanism as claimed in any one of claims 1 to 4.
